Europäisches Patentamt

European Patent Office

Office européen des brevets

(19)

(11) **EP 0 692 705 B1**

(12) **EUROPÄISCHE PATENTSCHRIFT**

(45) Veröffentlichungstag und Bekanntmachung des Hinweises auf die Patenterteilung:
**11.03.1998   Patentblatt 1998/11**

(51) Int Cl.6: **G01K 11/00**, G01K 11/32, G01D 5/353

(21) Anmeldenummer: **95111074.1**

(22) Anmeldetag: **14.07.1995**

(54) **Verfahren zur Auswertung optisch rückgestreuter Signale zur Bestimmung eines streckenabhängigen Messprofils eines Rückstreumediums**

Method for evaluating backscattered optical signals for determining a position depending measuring profile of a backscatting medium

Méthode d'exploitation de signaux optiques rétrodiffusés pour déterminer un profil de mesure en fonction de la position d'un milieu rétrodiffuseur

(84) Benannte Vertragsstaaten:
**AT CH DE FR GB IT LI NL**

(30) Priorität: **16.07.1994   DE 4425242**

(43) Veröffentlichungstag der Anmeldung:
**17.01.1996   Patentblatt 1996/03**

(73) Patentinhaber: **Felten & Guilleaume Energietechnik AG**
**51063 Köln (DE)**

(72) Erfinder: **Glombitza, Ulrich Dr.-Ing.**
**D-51429 Bergisch Gladbach (DE)**

(56) Entgegenhaltungen:
- **OPTICS LETTERS, Bd. 17, Nr. 22, 15.November 1992 WASHINGTON US, Seiten 1623-1625, XP 000320070 R. JUSKAITIS E.A. 'DISTRIBUTED INTERFEROMETRIC FIBER SENSOR SYSTEM'**
- **PROCEEDINGS OF SPIE, Bd. 566, 20. - 23. August 1985 BELLINGHAM, WASHINGTON (USA), Seiten 2-15, XP 000014738 RAMON PEREZ DE PAULA E.A. 'FIBER OPTIC SENSOR OVERVIEUW'**
- **JOURNAL OF PHYSICS D APPLIED PHYSICS., Bd. 12, Nr. 19, Dezember 1986 LETCHWORTH GB, Seiten 2237-2255, A.J. ROGERS 'DISTRIBUTED OPTICAL-FIBRE SENSORS'**
- **SPIE FIBER OPTIC AND LASER SENSORS III, Bd. 566, 1985 Seiten 265-275, STUART A. KINGSLEY E.A. 'OFDR DIAGNOSTICS FOR FIBER/INTEGRATED OPTIC SYSTEMS AND HIGH RESOLUTION DISTRIBUTED FIBER OPTIC SENSING'**
- **PATENT ABSTRACTS OF JAPAN vol. 17 no. 626 (P-1647) ,18.November 1993 & JP-A-05 203410 (NTT) 10.August 1993,**

**Beschreibung**

Die Erfindung betrifft ein Verfahren zur Auswertung optisch rückgestreuter Signale zur Bestimmung eines streckenabhängigen Meßprofils eines Rückstreumediums. Als Rückstreumedium wird vorzugsweise an Festkörper (Lichtwellenleiter) gedacht.

Es werden nebeneinander Verfahren vorgeschlagen, die zur Auswertung unterschiedlicher physikalischer Größen einsetzbar sind.

Bei einem der Verfahren soll beispielsweise ein verteilter Temperatursensor (DTS = Distributed Temperature Sensor) eingesetzt werden. Mit solchen Sensoren kann durch Messung der Intensität des Raman-Streulichts die streckenabhängige Temperatur langer Lichtwellenleiter (Glasfaserleitungen) nach dem Frequency Modulation Continuous Wave-(FMCW)-Verfahren bestimmt werden.

Bei verteilten faseroptischen Sensoren dient eine Glasfaser als Meßwertaufnehmer, im Gegensatz dazu wird sie in der Nachrichtentechnik als optisch transparentes Übertragungsmedium verwendet.

Die Temperaturmessung basiert auf intrinsischen Streuprozessen (Raman- oder Brillouin-Streuung) der Quarzglasfaser. Die örtliche Auflösung des Temperaturverlaufes entlang der Glasfaser erfolgt dagegen durch Laufzeitmessung des Wellenleiterlichtes.

Zur Zeit sind auf dem Markt DTS-Systeme erhältlich, die das Raman-Streulicht zur faseroptischen Temperaturbestimmung nutzen.

Die Laufzeitmessung dieser DTS-Systeme basiert auf der optischen Zeitbereichsreflektometrie (Optical Time Domain Reflectometry, OTDR). Ihre Funktionsweise ist vergleichbar mit der optischer Rückstreuverfahren, welche für die Diagnose von faseroptischen Übertragungsstrecken verwendet werden.

Der Aufbau der OTDR-DTS-Systeme besteht aus einer gepulsten Laserquelle, einem optoelektronischen Empfänger (Photodetektor, Signalmittlungseinheit) und einer Quarzglasfaser als faseroptischer Sensor.

Die vom Laser erzeugten Lichtimpulse werden in die Glasfaser eingekoppelt und in Längsrichtung der Faser geführt. Dichteschwankungen des Quarzglases bewirken eine kontinuierliche Streuung (Rayleigh-Streuung), die wiederum eine Dämpfung der Lichtimpulse bewirkt. Zusätzlich tritt durch thermische Gitterschwingungen des Glasmaterials eine weitere Lichtstreuung auf, die sogenannte Raman-Streuung. Ein Bruchteil dieses Streulichtes (Rayleigh- und Raman-Streulicht) fällt in den Aperturwinkel des Wellenleiters und breitet sich sowohl in Vorwärts- (Transmission) als auch in Rückwärtsrichtung (Reflexion) aus. Das Streulicht läßt sich mit einem lichtempfindlichen Photodetektor (vorzugsweise Avalanche Photodiode) nachweisen.

Die Streuung entlang der Faser kann als eine Summe von verteilten Reflektoren aufgefaßt werden. Pro Längeneinheit (dies entspricht der örtlichen Auflösung des Reflektometers) läßt sich ein Leistungsreflektionsfaktor definieren. Entsprechend dem Puls-Echo-Verfahren kann aus der Laufzeitdifferenz zwischen dem Aussenden der Lichtimpulse und der Detektion des Streusignals der Streuort (Reflexionsort) bestimmt werden. Die minimale optische Impulsbreite der Lichtquelle begrenzt die erreichbare örtliche Auflösung.

Die spektrale Zerlegung des Streulichtes zeigt, daß bei Wellenlänge $l_o$ der Laserquelle Rayleigh-Streulicht und Reflexionslicht, bei der Stokes-Linie und Anti-Stokes-Linie spontanes Raman-Streulicht vorliegt. Aus dem Verhältnis der Intensitäten von Stokes- und Anti-Stokes-Linie wird die Fasertemperatur ermittelt. Im Gegensatz zum Raman-Streulicht ist das Rayleigh-Streulicht und Reflexionslicht eine unerwünschte Meßgröße.

Beim OTDR-DTS-Verfahren wird eine hohe Ortsauflösung erzielt, indem Lichtquellen mit kurzen Lichtimpulse verwendet werden. Lichtquellen im Puls-Betrieb verfügen allerdings über eine kleinere mittlere Ausgangsleistung als im Dauerstrich-Betrieb.

Dies wirkt sich beim DTS-Verfahren nachteilig aus. Eine kleinere Lichtleistung bedeutet eine geringere Raman-Streuung und somit einen kleineren Meßbereich bzw. geringere Temperaturgenauigkeit.

Dieser Nachteil wird beim OTDR-DTS-Verfahren durch die Verwendung leistungsstarker Laserquellen bzw. durch aufwendige bzw. schnelle Signalmittlungstechniken ausgeglichen. Dieser technische Nachteil schlägt sich im Verkaufspreis nieder.

Es ist **Aufgabe der Erfindung,** Verbesserungen dahingehend vorzuschlagen, so daß die Nachteile bekannter Verfahren nicht mehr auftreten.

Vorgeschlagene Lösungen finden sich in den nebengeordneten Ansprüchen. Vorteilhafte Weiterbildungen werden in den untergeordneten Ansprüchen dargestellt.

Im Einzelnen wird beansprucht:

**Ein Verfahren zur Temperaturbestimmung**

Bei diesem Auswerteverfahren für optisch rückgestreute Signale zur Bestimmung eines streckenabhängigen Temperaturprofils eines Rückstreumediums, wobei Licht in das Rückstreumedium mindestens von einem Streckenende her einstrahlbar ist, sind folgende Verfahrensschritte vorzunehmen:

- das Licht einer Lichtquelle 3 wird in seiner Amplitude moduliert und zeitlich in der Frequenz durchgestimmt,

- in Abhängigkeit vom Leistungsdichtespektrum wird das Licht der Lichtquelle so vorgefiltert (Filter 6 und 8), daß sich die Intensität des Rückstreulichts im spektralen Ramanband reduziert,

- das Licht der Lichtquelle 3 wird in das Rückstreumedium 1 und in mindestens einen Referenzkanal RK eingekoppelt und das Rückstreulicht wird wellenlängenselektiv nach Referenzband und Meßband (im folgenden 'zwei Meßkanäle' K1,K2) ausgekoppelt (wellenselektive Filter 9.1,9.2),

- die ausgekoppelten Spektralbereiche werden in Abhängigkeit der Güte der wellenselektiven Filterung (Filter 9.1,9.2) bandpaßgefiltert (Filter 10.1,10.2),
- in Abhängigkeit von der Qualität der wellenselektiven Einkopplung in das Rückstreumedium 1 wird ein Notchfilter zur Bewertung des Lichts bei der Mittenwellenlänge der Lichtquelle in beide Meßkanäle eingesetzt,
- die Empfangssignale der beiden Meßkanäle und das Referenzkanallicht werden opto-elektronisch gewandelt (Photodioden P1, P2,P3) und in einem Netzwerkanalysator (Modul 4) ausgewertet,
- die ausgewerteten drei Signale werden je mit einer Fensterfunktion (Modul 5.1) bewertet und Fouriertransformiert (Modul 5.2), - die Fourier-Transformierten der beiden Meßkanäle werden mit der Fourier-Transformierten des Referenzkanallichts normiert (Modul 5.4),
- Eliminierung der streckenabhängigen (jedoch temperaturunabhängigen) Eigenschaften der Rückstreu-Signale,
- die korrigierten Signale der beiden Meßkanäle werden zueinander ins Verhältnis gesetzt (Modul 5.4).

Die Streckenabhängigkeit der Dämpfung der Rückstreu-Signale kann über eins von drei möglichen Verfahren erfolgen. 1. Der streckenabhängige Dämpfungsverlauf des Rückstreumediums ist aus Stoffwerten bekannt. 2. Der Dämpfungsverlauf wird aus einer Messung mit dem vorliegenden System ermittelt. 3. Der Dämpfungsverlauf wird aus zwei Messungen mit dem vorliegenden System ermittelt, wobei das Rückstreumedium einmal in Vorwärtsrichtung und einmal in Rückwärtsrichtung vermessen wird. Hierzu ist es also nötig, Licht in das Rückstreumedium jeweils in jedes Ende einzukoppeln und auszumessen.

In Modul 5.4 können bekannte Werte elektronisch vorgespeichert werden und die numerische Behandlung (Multiplikation von Exponentialfunktionen, Subtraktion von logarithmischen Dämpfungswerten) vorgenommen werden.

Vorzugsweise werden als Referenzband das Stokes-Licht und als Meßband das Anti-Stokes-Licht verwendet.

Das Licht einer vorzugsweise schmalbandigen Lichtquelle (Laser 3) wird vom erwähnten Netzwerkanalysator in seiner Amplitude moduliert und zeitlich in der Frequenz durchgestimmt (Modul 2).

## Weitere Verfahren zur Messung von Feuchte- oder Krafteinwirkung

Bei diesen Auswerteverfahren für optisch rückgestreute Signale zur Bestimmung eines streckenabhängigen Meßprofils der Einwirkung von Feuchte oder Kräfte auf ein Rückstreumedium, wobei Licht in das Rückstreumedium mindestens von einem Streckenende her einstrahlbar ist, sind folgende Verfahrensschritte vorzunehmen:

- das Licht einer Lichtquelle - entweder einer breitbandigen Lichtquelle oder zweier wellenlängenverschobener Lichtquellen wird in seiner Amplitude moduliert und zeitlich in der Frequenz durchgestimmt,
- das Licht der Lichtquelle wird in das Rückstreumedium und in mindestens einen Referenzkanal eingekoppelt und das Rückstreulicht (Raman-, vorzugsweise Rayleigh-Streulicht) wird wellenlängenselektiv nach Referenzband und einem feuchte- oder kraftbeeinflußbaren Meßband (im folgenden 'zwei Meßkanäle') ausgekoppelt,
- die ausgekoppelten Spektralbereiche werden in Abhängigkeit der Güte der wellenselektiven Filterung bandpaßgefiltert,
- die Empfangssignale der beiden Meßkanäle und das Referenzkanallicht werden opto-elektronisch gewandelt und in einem Netzwerkanalysator ausgewertet,
- die ausgewerteten drei Signale werden je mit einer Fensterfunktion bewertet und Fourier-transformiert,
- die Fourier-Transformierten der beiden Meßkanäle werden mit der Fourier-Transformierten des Referenzkanallichts normiert,
- Eliminierung der streckenabhängigen Eigenschaften der Signale der Meßkanäle,
- die korrigierten Signale der beiden Meßkanäle werden zueinander ins Verhältnis gesetzt.

In Bezug auf die Kraftmessung müssen die Begriffe Referenzband und kraftbeeinflußbares Meßband des einen Meßkanals so verstanden werden, daß für das Referenzband ein Spektralbereich gewählt wird, der möglichst gering von Micro-bending-Störungen und für das Meßband ein Spektralbereich gewählt wird, der möglichst stark von Micro-bending-Störungen beeinflußt wird.

Die im ersten Verfahren mit Bezugszeichen gekennzeichneten Größen und Module werden mit diesem Verfahren entsprechend auch benutzt. Die Eliminierung der Streckenabhängigkeit der Dämpfung der Rückstreu-Signale erfolgt nach den schon im ersten Verfahren angegebenen Schritten und ihrer Alternativen.

Vorzugsweise für Feuchtemessung soll das Spektralband (als Meßband) der Absorption des in das Rückstreumedium eingelagerten Wasserstoffs und als Referenzband ein Spektralband verwendet werden, welches möglichst ohne Einfluß der Absorption des eingelagerten Wasserstoffs ist. Die Maxima der Absorptionsbanden des Wasserstoffs sind bekannt und liegen etwa bei 1240 nm (beispielsweise reversible Einlagerung von Wasserstoff in Quarz) bzw. bei 1390 nm (beispielsweise irreversible Einlagerung). Das Referenzband sollte möglichst von den Absorptionsbanden weit entfernt liegen, um ihren Einfluß zu minimieren.

Vorzugsweise wird als Rückstreumedium ein Lichtwellenleiter benutzt, der aus einem örtlich hin- und einem rückführenden Strang besteht und der am Ende der Meßstrecke über eine Schlaufe läuft, so daß beide Stränge etwa dieselbe örtliche Lage einnehmen. Vorzugsweise wird einer der Stränge gegen Feuchteeinwirkung hermetisch abgeschirmt, was sich beispielsweise dadurch erreichen läßt, daß dieser Strang in einem Mantel liegt, welcher undurchlässig gegen Feuchte ist (z.B. aus Edelstahl).

Vorzugsweise soll für Kraftmessung als Meßband Licht einer festen, hohen Wellenlänge (etwa 1550 nm oder 1650 nm) benutzt werden, das vom Rückstreumedium möglichst schwach geführt und als Referenzband Licht mit einer Wellenlänge, das im Rückstreumedium möglichst stark geführt wird (etwa 980 nm, 1064 nm, 1300 nm). In der Meßfaser werden physikalisch microbending-Störungen zur Messung ausgenutzt.

Das zweite Verfahren kann mit den hierfür aufgeführten Verfahrensschritten auch zur Temperaturmessung verwendet werden, wobei temperaturabhängige Eigenschaften, insbesondere Ausdehnungskoeffizienten des Coatings von Lichtwellenleitern ausgenutzt werden. Temperaturabhängige Ausdehnungskoeffizienten bewirken die temperaturabhängige Zu- oder Abnahme von Druckkräften auf den Lichtwellenleiter, wodurch indirekt über den Krafteinfluß Temperatur meßbar wird.

Äußere Einflüsse (Temperatur) können Änderungen der Mittenwellenlänge der Lichtquelle im Bereich des Meßkanals bewirken. Als weitere Ausgestaltung aller vorgeschlagenen Verfahren kann vorgesehen sein, daß eine Veränderung dieser Wellenlänge auf die maximale Transmission des oder der Filter vorgenommen wird. Die Anpassung der Mittenwellenlänge der Lichtquelle läßt sich bei Laserdioden einfach gestalten, indem man die Temperaturabhängigkeit ihrer Sendewellenlänge ausnutzt und die Laserdiode entsprechend temperiert.

Alle vorgeschlagenen Verfahren heben ab besonders auf Laufzeitmeßverfahren im Frequenzbereich (OFDR). Weitere Möglichkeit bestehen im Einsatz anderer Laufzeitverfahren im Zeitbereich mit Pulstechniken (Optical time domain reflectometry OTDR) oder speziellen Pulscode-Techniken (z.B. Pseudo-Noise-Verfahren) mit einer jeweils angepaßten optischen Filterung und einer optoelektronischen Auswertung.

**Ausführliche Darstellung für das Beispiel der Messung eines Temperaturprofils**

Bei dem vorliegenden DTS-Konzept wird für die Laufzeitmessung ein Verfahren gewählt, das im Gegensatz zur Zeitbereichsreflektometrie einen Laser im Dauerstrich verwendet, dessen Frequenz zeitlinear durchgestimmt wird. Das hier vorgestellte Meßprinzip entspricht dem der optischen Frequenzbereichsreflektometrie (Optical Frequency Domain Reflectometry, OFDR), bei der die maximale Frequenzverschiebung des Lasers (Durchstimmbereich) die erzielbare örtliche Auflösung bestimmt.

Im Vergleich zu einem Laser im Pulsbetrieb läßt sich entlang der Faser eine höhere mittlere Lichtleistung führen und die Meßsignale schmalbandiger detektieren, so daß die spontane Raman-Streuung und somit die Fasertemperatur über eine größere Faserstrecke aber auch mit einer höheren Genauigkeit bestimmt werden kann. Um diese Vorzüge der Frequenzbereichsreflektometrie für ein DTS-System zu nutzen, ist es je nach Güte des Laserspektrums und der wellenselektiven Filterung notwendig, eine spektrale Vor- und Nachfilterung des Meßlichtes vorzunehmen. Diese Maßnahme ergibt die gewünschte Selektion des Raman-Streulichtes und ermöglicht die FMCW-Messung des Temperaturverlaufs entlang eines Rückstreumediums (vorzugsweise einer Quarzleitung) mit großer Länge.

Im Unterschied zur Zeitbereichsreflektometrie, bei der die Lichtimpulse zeitlich nacheinander am Photodetektor eintreffen und ausgewertet werden, erhält man bei der Frequenzbereichsreflektometrie nur dann eine Aussage über den örtlichen Temperaturverlauf, wenn das Detektorsignal (Summensignal) als Funktion der Momentanfrequenz gemessen und komplexe Größe verarbeitet wird. Reflexionsstellen des optischen Aufbaus, FresnelReflexionen (Glasfaser, optische Filter etc.) sowie Rayleigh-Streuungen besitzen im Vergleich zum Raman-Streulicht einen um mehrere Größenordnungen höheren Leistungsreflexionsfaktor.

Diese starke Dominanz des Störlichtes stellt eine technisch schwer erreichbare Anforderung an die Empfängerdynamik dar. Aus diesem Grund erfolgt eine spektrale Vor-/Nachfilterung des Meßlichtes, damit vorwiegend das zum Raman-Streulicht korrespondierende FMCW-Signal am Photodetektor nachgewiesen werden kann.

Folgende Vorteile der Erfindung unter besonderer Berücksichtigung des Temperaturmeßverfahrens ergeben sich.

Durch die Verwendung spezieller spektraler Filtertechniken läßt sich ein Meßverfahren mit einem verteilten FMCW-Temperatursensor realisieren, mit dem der Temperaturverlauf mit hoher Genauigkeit entlang großer optischer Faserstrecken bestimmt werden kann.

Die Anwendung der FMCW-Technik für die faseroptische Temperaturmessung des Raman-Streulichtes entlang faseroptischer Wellenleiter ermöglicht einen technisch einfacheren und preiswerteren Aufbau als herkömmliche DTS-Systeme. Weitere Vorzüge sind, daß diese FMCW-DTS-Systeme unmittelbar auf andere Wellenlängenbereiche übertragbar sind und das durch Vorgabe des Durchstimmbereichs die Ortsauflösung wählbar ist.

Durch den technischen Vorteil dieses FMCW-DTS-Verfahrens können neue Märkte bei der Temperaturüberwachung wie z.B. im Bereich des Objektschutzes (U-Bahn-Tunnel), der Geologie sowie der Umwelt-, Produktions- oder Energietechnik erschlossen werden.

Ein Weg zur Ausführung der Erfindung wird unter Bezugnahme auf die Figuren beschrieben. Es zeigen

Fig. 1. den schematischen Aufbau eines FMCW-Systems,

Fig. 2. den Dämpfungsverlauf des Raman-Rück-Streulichts und

Fig. 3. schematisch einen Temperaturverlauf.

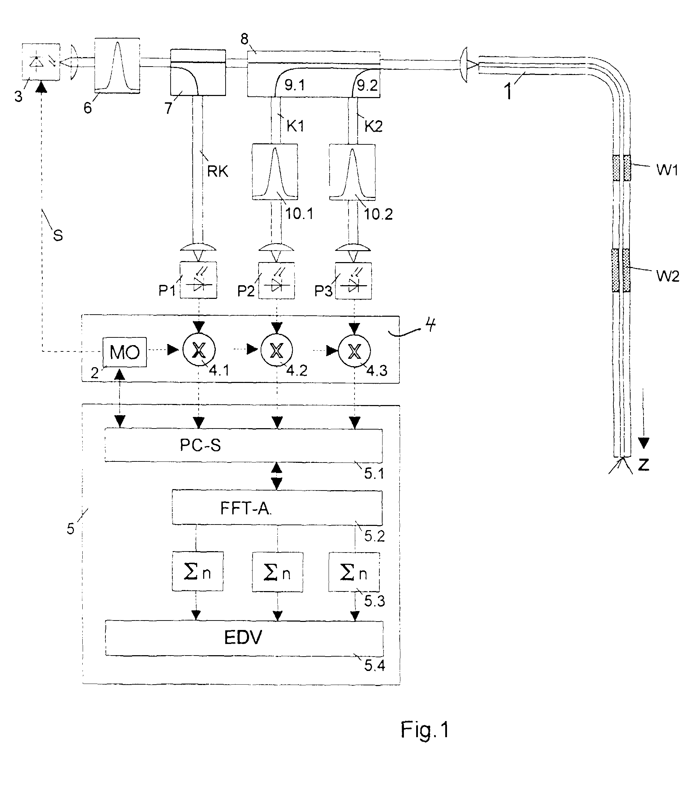

Ein FMCW-Meßsystem besteht nach Fig. 1 aus einem optischen Sender 3 (FMCW-Laserquelle), einer spektralen Vorfilterung (Filter 6 und 8) und einer Nachfilterung (Filter 9.1,9.2; 10.1, 10.2), einer faseroptischen Meßstrecke 1 (Lichtwellenleiter) und einer zweikanaligen Empfängereinheit, bestehend aus je einer Photodiode P2,P3 und je einem HF-(Hochfrequenz)-Mischer 4.2,4.3. Die beiden Kanäle K1,K2 der Empfängereinheit entsprechen dem Laufweg des Lichts des Meßbandes und dem des Referenzbandes. Falls die Güte des Filters 8 (wellenselektiver Koppler) nicht ausreichend ist, wird jeweils ein Notchfilter im Kanal K1 und K2 eingesetzt.

Das durch Bezugszeichen 8,9.1,9.2 angedeutete Modul kann aus Einzelkomponenten oder als Kompaktsystem aufgebaut sein.

Parallel zu den erwähnten Kanälen verläuft ein Referenzkanal RK, dessen Licht mittels Leistungskoppler 7 aus dem Primärstrahlengang entnommen wird und ebenfalls auf eine Photodiode P1 trifft und an die Empfängereinheit 4.1 weitergegeben wird. Die Signale aus den drei Kanälen laufen dann über eine Schnittstelle 5.1 in die numerische Weiterverarbeitung, vorzugsweise in einem Personal Computer. Sie besteht aus der Fensterung der Meßsignale (in Modul 5.1), die Fast Fourier Transformation (FFT) (Modul 5.2), Signalmittelung (Modul 5.3) und der abschließenden EDV-Bearbeitung (Modul 5.4).

Die Zeitfunktion der Ausgangsleistung P(t) des Lasers 3 wird im Meßzeitintervall T mit dem HF-Modulator 4 entsprechend dem folgenden Ausdruck beschrieben (Gleichung 1):

$$P(t) = P_o \cos[2\pi\,(f_o + gt/2)\,t\,]\qquad 0 < t > T$$

mit der Durchstimmrate g, der Anfangsfrequenz $f_o$ und $f_m = f_o + gt$ der Momentanfrequenz der Lichtquelle.

Laserquellen besitzen aufgrund ihrer Resonatorstruktur ein kammartiges (longitudinales) Modenspektrum. Die Strahlungsleistung wird nicht nur bei der Emissionswellenlänge $l_o$ (Hauptmodus) geführt sondern verteilt sich auf die nächstliegenden Nebenmoden. Die Lage dieser Ausläufer fällt in den Spektralbereich des zu erwartenden Raman-Streulichtes. Aus diesem Grund wird das frequenzmodulierte Laserlicht vor der Einkopplung in die Glasfaserleitung 1 mit z.B. einem Absorptionsfilter 6 vorgefiltert. Das aus der Faser 1 rückgestreute Licht wird mit Hilfe beispielsweise zweier Wavelength Division Multiplexing-(WDM)-Filter (Bezugszeichen 8; 9.1,9.2) so bewertet bzw. vorgefiltert, daß die Spektralanteile bei der Laserwellenlänge $l_o$ passieren und das Raman-Streulicht der Stokes- und Anti-Stokes-Linie zum jeweiligen Ausgang transferriert. In der Nachfilterung wird das Laserlicht und das Rayleigh-Streulicht unterdrückt, und in jeweils einem Kanal nur selektiv (Bandpaßfilter 10.1 bzw. 10.2) Raman-Streulicht durchgelassen.

Das Meßlicht der Stokes- (K1) und der Anti-Stokes-Linie (K2) des Raman-Streulichtes gelangt auf die beiden lichtempfindlichen Dioden (Photodetektoren P2,P3). Die elektrischen Signale werden verstärkt und mit dem Modulationssignal der Laseransteuerung (Signalleitung S) in den niederfrequenten Spektralbereich (NF-Bereich) gemischt und über die Rechnerschnittstelle an den FFT-Analysator (Modul 5.2) übergeben.

Lichtwellen, die aus unterschiedlichen Streu- bzw. Reflexionsorten entlang der Glas- oder Quarzfaser reflektiert werden, beispielsweise aus den Bereichen W1,W2 der Faser 1 mit erhöhter Temperatur, besitzen auch unterschiedliche Laufzeiten $tau_m$ zum Ort der Photodetektoren P2,P3. Unter der Voraussetzung m diskreter Reflektoren und einer zeitlich linearen elektrischen Frequenzdurchstimmung des Lasers setzen sich die beiden NF-Spannungszeitsignale $U_{1,2}(t)$ aus jeweils einer Summe von cos-förmigen Termen zusammen (Gleichung 2):

$$U_{1,2}(t) = U_o \Sigma_m\,R_m \cos\,(2\pi\,g\,tau_m\,t + const)$$

mit der konstanten Spannungsamplitude $U_o$ und dem Leistungsreflexionsfaktor $R_m$ des Ramanstreulichtes aus dem m-ten Längenelement der Meßfaser.

Die Fouriertransformierte ergibt dann ein Spektrum, in dem jeder Frequenz ein Ort (W1,W2) auf der Strecke z in der Faser 1 zugeordnet werden kann. Die Amplitude ist proportional zur Streuleistung des betrachteten Wegelementes z (Auflösungselement bzw. Ortsauflösung). Die Fouriertransformierten der Signale der beiden Meßkanäle werden mit der Fouriertransformierten des Referenzkanallichts normiert.

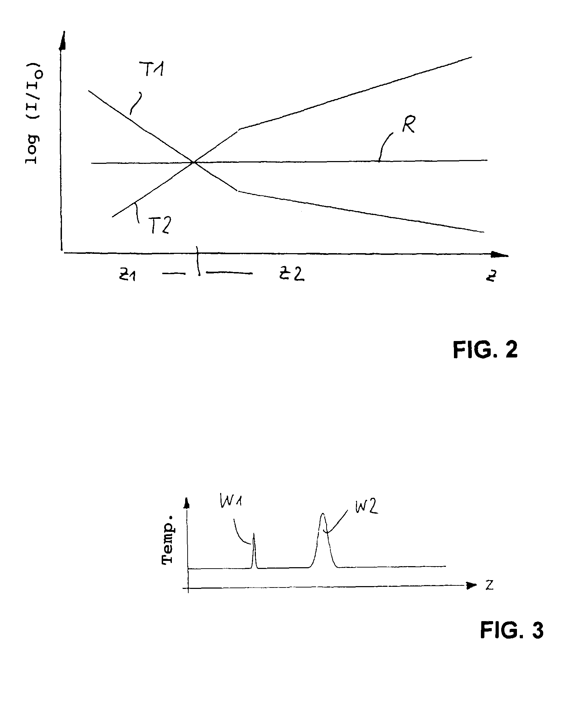

Die Faserdämpfung ist von der Wellenlänge der Lichtquelle und der Wellenlänge des Meßlichts abhängig. Sie bewirkt eine exponentielle Abnahme der Lichtintensität entlang des Rückstreumediums. Diese Streckenabhängigkeit kann eliminiert werden. Die möglichen Schritte hierzu sind schon beschrieben worden. Die normierte und dämpfungskorrigierte Fouriertransformation liefert somit den örtlichen Temperaturverlauf der Faserleitung (siehe auch Fig. 3).

Eine anschließende EDV-unterstützte Weiterverabeitung der Meßdaten (in Modul 5.4 in Fig. 1) ermöglicht eine der Verwendung bezogende Darstellung.

Fig. 2 zeigt den logarithmische Dämpfungsverlauf

$I/I_o$ (nahezu temperaturunabhängiges Raman-Streulicht der Stokes-Komponenten) entlang der Faser aus den Messungen jeweils von einem Ende der Faser 1 aus. Die Kurve T1 resultiert aus der Messung in Vorwärtsrichtung, Kurve T2 resultiert aus der Messung in Rückwärtsrichtung, wobei die Faser 1 auf zwei Streckenabschnitten (z1,z2) unterschiedliche Dämpfung aufweist, was sich durch Änderung der Steigung äußert. Durch Subtraktion beider Kurven entsteht die Resultierende R, die keine streckenabhängige Eigenschaften mehr beinhaltet. Analog hierzu läßt sich das temperaturabhängige Raman-Streulicht der Anti-Stokes-Komponente darstellen. Durch Bilden des Verhältnisses beider resultierenden Meßkurven folgt eine streckenunabhängige Temperaturaussage, so wie in Fig. 3 dargestellt.

Fig. 3 zeigt schematisch den Temperaturverlauf über die Faserstrecke z, wo im Bereiche W1 und W2 erhöhte Temperaturen vorliegen. Der dargestellte Verlauf ist das numerische Meßergebnis nach den vorgenommenen Normierungen und Korrekturen.

**Patentansprüche**

1. Verfahren zur Auswertung optisch rückgestreuter Signale zur Bestimmung eines streckenabhängigen Temperaturprofils eines Rückstreumediums (**1**), wobei Licht in das Rückstreumedium (**1**) mindestens von einem Streckenende her einstrahlbar ist, mit folgenden Verfahrensschritten:

   - das Licht einer Lichtquelle (**3**) wird in seiner Amplitude moduliert und zeitlich in der Frequenz durchgestimmt,
   - in Abhängigkeit vom Leistungsdichtespektrum wird das Licht der Lichtquelle (**3**) so vorgefiltert (**6,8**), daß sich die Intensität des Rückstreulichts im spektralen Ramanband reduziert,
   - das Licht der Lichtquelle (**3**) wird in das Rückstreumedium (**1**) und in mindestens einen Referenzkanal (**RK**) eingekoppelt und das Rückstreulicht wird wellenlängenselektiv nach Referenzband und Meßband, d.h. in zwei Meßkanäle (**K1,K2**), ausgekoppelt (**9.1,9.2**),
   - die ausgekoppelten Frequenzbereiche werden in Abhängigkeit der Güte der wellenselektiven Filterung (**9.1,9.2**) bandpaßgefiltert (**10.1,10.2**),
   - in Abhängigkeit von der Qualität der wellenselektiven Einkopplung (**8**) in das Rückstreumedium (**1**) wird ein Notchfilter zur Bewertung des Lichts bei der Mittenwellenlänge der Lichtquelle (**3**) in beide Meßkanäle (**K1,K2**) eingesetzt,
   - die Empfangssignale der beiden Meßkanäle (**K1,K2**) und das Referenzkanallicht (**RK**) werden opto-elektronisch gewandelt (**P1, P2,P3**) und in einem Netzwerkanalysator (**4**) ausgewertet,
   - die ausgewerteten drei Signale werden je mit einer Fensterfunktion (**5.1**) bewertet und Fourier-transformiert (**5.2**),
   - die Fourier-Transformierten der beiden Meßkanäle (**K1,K2**) werden mit der Fourier-Transformierten des Referenzkanallichts normiert (**5.4**),
   - die streckenabhängen Eigenschaften der Rückstreu-Signale werden eliminiert und
   - die korrigierten Signale der beiden Meßkanäle (**K1,K2**) werden zueinander ins Verhältnis gesetzt (**5.4**).

2. Verfahren zur Auswertung optisch rückgestreuter Signale zur Bestimmung eines streckenabhängigen Temperaturprofils nach Anspruch 1, **dadurch gekennzeichnet,** daß als Referenzband (**K1**) Stokes-Licht und als Meßband (**K2**) Anti-Stokes-Licht verwendet wird.

3. Verfahren zur Auswertung optisch rückgestreuter Signale zur Bestimmung eines streckenabhängigen Meßprofils der Einwirkung von Feuchte oder Kräfte auf ein Rückstreumedium (**1**), wobei Licht in das Rückstreumedium (**1**) mindestens von einem Streckenende her einstrahlbar ist, mit folgenden Verfahrensschritten:

   - das Licht einer Lichtquelle (**3**) wird in seiner Amplitude moduliert und zeitlich in der Frequenz durchgestimmt,
   - das Licht der Lichtquelle wird in das Rückstreumedium (**1**) und in mindestens einen Referenzkanal (**RK**) eingekoppelt und das Rückstreulicht wird wellenlängenselektiv nach Referenzband und einem kraft- oder feuchtebeeinflußbaren Meßband, d.h. in zwei Meßkanäle (**K1,K2**), ausgekoppelt (**9.1,9.2**),
   - die ausgekoppelten Frequenzbereiche werden in Abhängigkeit der Güte der wellenselektiven Filterung (**9.1,9.2**) bandpaßgefiltert,
   - die Empfangssignale der beiden Meßkanäle (**K1,K2**) und das Referenzkanallicht (**RK**) werden opto-elektronisch (**P1,P2,P3**) gewandelt und in einem Netzwerkanalysator (**4**) ausgewertet,
   - die ausgewerteten drei Signale werden je mit einer Fensterfunktion (**5.1**) bewertet und Fourier-transformiert (**5.2**),
   - die Fourier-Transformierten der beiden Meßkanäle (**K1,K2**) werden mit der Fourier-Transformierten des Referenzkanallichts normiert (**5.4**),
   - die streckenabhängigen Eigenschaften der Rückstreu-Signale werden eliminiert und
   - die korrigierten Signale der beiden Meßkanäle (**K1,K2**) werden zueinander ins Verhältnis gesetzt (**5.4**).

4. Verfahren zur Auswertung optisch rückgestreuter Signale zur Bestimmung eines streckenabhängigen Meßprofils der Einwirkung von Feuchte nach Anspruch 3, **dadurch gekennzeichnet,** daß die Messung mit einem Rückstreumedium (**1**) durchgeführt wird, welches aus einem hin- und einem rückführenden Strang besteht, wobei am Ende der Meßstrecke (**1**) die Stränge über eine Schlaufe verbunden sind, und daß einer der Stränge empfindlich gegen Feuchteeinwirkung ist und der andere Strang hermetisch gegen Feuchteeinwirkung abgeschirmt ist.

5. Verfahren zur Auswertung optisch rückgestreuter Signale nach Anspruch 4, **dadurch gekennzeichnet,** daß der gegen Feuchteeinwirkung unempfindliche Strang als Lichtwellenleiter (**1**) mit Edelstahlummantelung ausgebildet ist.

6. Verfahren zur Auswertung optisch rückgestreuter Signale nach einem der Ansprüche 4 oder 5, **dadurch gekennzeichnet,** daß als Meßband (**K2**) das Absorptionsband des in das Rückstreumedium (**1**) eingelagerten Wasserstoffs und als Referenzband (**K1**) eine feste Wellenlänge verwendet wird.

7. Verfahren zur Auswertung optisch rückgestreuter Signale zur Bestimmung eines streckenabhängigen Meßprofils zur Messung eines Temperaturprofils, jedoch mit den Verfahrensschritten des Anspruchs 3, **dadurch gekennzeichnet,** daß die Messung mit einem Rückstreumedium (**1**) durchgeführt wird, welches aus einem hin- und einem rückführenden Strang besteht, wobei am Ende der Meßstrecke die Stränge über eine Schlaufe verbunden sind, und daß einer der Stränge temperaturneutral und der andere Strang temperaturempfindlich ausgebildet ist.

8. Verfahren zur Auswertung optisch rückgestreuter Signale nach Anspruch 7, **dadurch gekennzeichnet,** daß der temperaturempfindliche Strang als Lichtwellenleiter (**1**) mit einem Coating mit stark temperaturabhängigem Ausdehnungskoeffizienten ausgebildet ist.

9. Verfahren zur Auswertung optisch rückgestreuter Signale nach einem der Ansprüche 3 bis 8, **dadurch gekennzeichnet,** daß als Referenzband (**K1**) Wellenlängen von im Rückstreumedium (**1**) schwach geführtem und als Meßband (**K2**) feste Wellenlängen von im Rückstreumedium (**1**) stark geführtem Licht verwendet werden.

10. Verfahren zur Auswertung optisch rückgestreuter Signale zur Bestimmung eines streckenabhängigen Meßprofils eines Rückstreumediums nach einem der vorhergehenden Ansprüche, **dadurch ge-**

**kennzeichnet,** daß bei systembedingter Änderung der Mittenwellenlänge der Lichtquelle (**3**) im Bereich der Meßkanäle (**K1,K2**) eine Veränderung dieser Wellenlänge auf die maximale Transmission des oder der Filter vorgenommen wird.

**Claims**

1. Method for evaluating optically backscattered signals for determining a segment-dependent temperature profile of a backscattering medium (**1**), it being possible for light to be radiated into the backscattering medium (**1**) at least from one end of the segment, with the following method steps:

   - the light of a light source (**3**) is modulated in its amplitude and tuned in frequency with respect to time,
   - depending on the power density spectrum, the light of the light source (**3**) is prefiltered (**6,8**) such that the intensity of the backscattered light in the spectral Raman band is reduced,
   - the light of the light source (**3**) is coupled into the backscattering medium (**1**) and into at least one reference channel (**RK**), and the backscattered light is coupled out wavelength-selectively (**9.1,9.2**) according to the reference band and measurement band, i.e. "two measurement channels" (**K1,K2**),
   - the frequency ranges coupled out are filtered through bandpass filters (**10.1,10.2**) according to the quality of the wave-selective filtering (**9.1,9.2**),
   - a notch filter is inserted in both measurement channels (**K1,K2**) to evaluate the light at the average wavelength of the light source (**3**), according to the quality of the wave-selective coupling (**8**) into the backscattering medium (**1**),
   - the reception signals of the two measurement channels (**K1,K2**) and the reference channel light (**RK**) are converted opto-electronically (**P1,P2,P3**) and evaluated in a network analyser (**4**),
   - the three signals evaluated are in each case assessed with a window function (**5.1**) and subjected to Fourier transformation (**5.2**),
   - the Fourier transforms of the two measurement channels (**K1,K2**) are normalized with the Fourier transform of the reference channel light (**5.4**),
   - the segment-dependent properties of the backscattered signals are eliminated,
   - the corrected signals of the two measurement channels (**K1,K2**) are set in relation to one another (**5.4**).

2. Method for evaluating optically backscattered signals for determining a segment-dependent temperature profile according to claim 1, **characterized in that** Stokes light is used as the reference band **(K1)** and anti-Stokes light is used as the measurement band (**K2**).

3. Method for evaluating optically backscattered signals for determining a segment-dependent measuring profile of the action of moisture or forces on a backscattering medium (**1**), it being possible for light to be radiated into the backscattering medium (**1**) at least from one end of the segment, with the following method steps:

   - the light of a light source (**3**) is modulated in its amplitude and tuned with respect to time in frequency,
   - the light of the light source is coupled into the backscattering medium (**1**) and into at least one reference channel (**RK**) and the backscattered light is coupled out (**9.1,9.2**) wavelength-selectively according to the reference band and to a measurement band which can be influenced by force or moisture i.e. in "two measurement channels" (**K1,K2**),
   - the frequency ranges coupled out are filtered through bandpass filters according to the quality of the wave-selective filtering (**9.1,9.2**),
   - the reception signals of the two measurement channels (**K1,K2**) and the reference channel light (**RK**) are converted opto-electronically (**P1,P2,P3**) and evaluated in a network analyser (**4**),
   - the three signals evaluated are each assessed with a window function (**5.1**) and subjected to Fourier transformation (**5.2**),
   - the Fourier transforms of the two measurement channels (**K1,K2**) are normalized with the Fourier transform of the reference channel light (**5.4**),
   - the segment-dependent properties of the signals are eliminated,
   - the corrected signals of the two measurement channels (**K1,K2**) are set in relation to one another (**5.4**).

4. Method for evaluating optically backscattered signals for determining a distance-dependent measuring profile of the action of moisture according to claim 3, **characterized in that** the measurement is carried out with a backscattering medium (1) which comprises a strand which guides forwards and a strand which guides backwards, the strands being joined via a loop at the end of the measurement segment (**1**), and in that one of the strands is sensitive to the action of moisture and the other strand is shielded hermetically against the action of moisture.

5. Method for evaluating optically backscattered signals according to claim 4, **characterized in that** the strand which is insensitive to the action of moisture is constructed as a light waveguide (1) with a high-grade steel sheathing.

6. Method for evaluating optically backscattered signals according to one of claims 4 or 5, **characterized in that** the absorption band of the hydrogen incorporated in the backscattering medium (**1**) is used as the measurement band (**K2**) and a fixed wavelength is used as the reference band (**K1**).

7. Method for evaluating optically backscattered signals for determining a segment-dependent measuring profile for measurement of a temperature profile, but with the process steps of claim 3, **characterized in that** the measurement is carried out with a backscattering medium (**1**) which comprises a strand which guides forwards and a strand which guides backwards, the strands being joined via a loop at the end of the measurement segment, and in that one of the strands is constructed in a temperature-neutral form and the other strand is constructed in a temperature-sensitive form.

8. Method for evaluating optically backscattered signals according to claim 7, **characterized in that** the temperature-sensitive strand is constructed as a light waveguide (**1**) with a coating with a highly temperature-dependent expansion coefficient.

9. Method for evaluating optically backscattered signals according to one of claims 3 to 8, **characterized in that** wavelengths of light guided weakly in the backscattering medium (**1**) are used as the reference band **(K1)** and fixed wavelengths of light guided intensely in the backscattering medium (**1**) are used as the measurement band (**K2**).

10. Method for evaluating optically backscattered signals for determining a segment-dependent measuring profile of a backscattering medium according to one of the preceding claims, **characterized in that** in the case of a system-related change in the average wavelength of the light source (**3**) in the region of the measurement channel (**K1, K2**), a change in this wavelength to that of the maximum transmission of the filter or filters is carried out.

**Revendications**

1. Procédé d'analyse de signaux optiques rétrodiffusés, destiné à la détermination d'un profil de température d'un milieu rétrodiffusant (1) qui varie sur la longueur du parcours,

dans lequel une lumière peut être injectée dans le milieu rétrodiffusant (1) au moins par une extrémité de la ligne, comprenant les étapes de procédé suivantes :

- la lumière d'une source lumineuse (3) est modulée en amplitude et sa fréquence est modifiée dans le temps ;
- en fonction du spectre de densité de puissance, la lumière de la source lumineuse (3) est préfiltrée (6, 8) de manière que l'intensité de la lumière rétrodiffusée soit réduite dans la bande du spectre Raman,
- la lumière de la source lumineuse (3) est couplée dans le milieu rétrodiffusant (1) et dans au moins un canal de référence (RK), et la lumière rétrodiffusée est découplée (9.1, 9.2), sélectivement en fonction de la longueur d'onde, d'après la bande de référence et la bande de mesure, c'est-à-dire dans deux canaux de mesure (K1, K2),
- les zones spectrales découplées sont soumises à une filtration passe-bande (10.1, 10.2) selon la qualité de la filtration sélective en fonction de l'onde (9.1, 9.2),
- selon la qualité du couplage sélectif (8) en fonction de l'onde dans le milieu rétrodiffusant (1), on utilise dans chacun des deux canaux de mesure (K1, K2) un filtre coupe-bande à bande étroite pour l'analyse de la lumière à la longueur d'onde moyenne de la source lumineuse (3),
- les signaux de réception des deux canaux de mesure (K1, K2) et la lumière du canal de référence (RK) sont convertis opto-électroniquement (P1, P2, P3) et sont analysés dans un analyseur de réseau (4),
- les trois signaux analysés sont évalués chacun avec une fonction de fenêtrage (5.1) et soumis à une transformation de Fourier (5.2),
- les transformées de Fourier des deux canaux de mesure (K1, K2) sont cadrées avec la transformée de Fourier de la lumière du canal de référence (5.3),
- les propriétés des signaux rétrodiffusés qui sont fonction de la longueur de parcours sont éliminées, et
- le rapport entre les signaux corrigés des deux canaux de mesure (K1, K2) est calculé (5.4).

2. Procédé d'analyse de signaux optiques rétrodiffusés, destiné à la détermination d'un profil de température qui varie sur la longueur de parcours selon la revendication 1, caractérisé en ce qu'on utilise une lumière Stokes comme bande de référence (K1) et une lumière Anti-Stokes comme bande de mesure (K2).

3. Procédé d'analyse de signaux optiques rétrodiffusés, destiné à la détermination d'un profil de mesure qui varie sur la longueur de parcours de l'influence de l'humidité ou de forces sur un milieu rétrodiffusant (1), dans lequel une lumière peut être injectée dans le milieu rétrodiffusant (1) par au moins une des extrémités du parcours,
qui comprend les étapes de procédé suivantes :

- la lumière d'une source lumineuse (3) est modulée en amplitude et sa fréquence est modifiée dans le temps,
- la lumière de la source lumineuse est couplée dans le milieu rétrodiffusant (1) et dans au moins un canal de référence (RK), et la lumière rétrodiffusée est découplée (9.1, 9.2), sélectivement en fonction de la longueur d'onde, d'après la bande de référence et la bande de mesure pouvant être influencée par des forces ou par l'humidité, c'est-à-dire dans deux canaux de mesure (K1, K2),
- les zones de fréquence découplées sont soumises à une filtration passe-bande selon la qualité de la filtration sélective en fonction de l'onde (9.1, 9.2),
- les signaux de réception des deux canaux de mesure (K1, K2) et la lumière du canal de référence (RK) sont convertis opto-électroniquement (P1, P2, P3) et sont analysés dans un analyseur de réseau (4),
- les trois signaux analysés sont évalués chacun avec une fonction de fenêtrage (5.1) et soumis à une transformation de Fourier (5.2),
- les transformées de Fourier des deux canaux de mesures (K1, K2) sont cadrées (5.3) avec la transformée de Fourier de la lumière du canal de référence,
- les propriétés des signaux rétrodiffusés qui sont fonction de la longueur de parcours sont éliminées, et
- le rapport entre les signaux corrigés des deux canaux de mesure (K1, K2) est calculé (5.4).

4. Procédé d'analyse de signaux optiques rétrodiffusés, destiné à la détermination d'un profil de mesure en fonction de la longueur de parcours de l'influence de l'humidité selon la revendication 3, caractérisé en ce que la mesure est exécutée avec un milieu rétrodiffusant (1) qui est composé d'un brin d'aller et d'un brin de retour, lesdits brins étant reliés par une boucle à l'extrémité du parcours de mesure (1), et en ce que l'un des brins est sensible à l'influence de l'humidité tandis que l'autre brin est protégé hermétiquement de l'influence de l'humidité.

5. Procédé d'analyse de signaux optiques rétrodiffusés selon la revendication 4, caractérisé en ce que le brin insensible à l'influence de l'humidité est constitué par un guide d'ondes lumineuses (1) muni d'un gainage en acier inoxydable.

6. Procédé d'analyse de signaux optiques rétrodiffusés selon une des revendications 4 et 5, caractérisé en ce qu'on utilise comme bande de mesure (K2) la bande d'absorption de l'hydrogène inclus dans le milieu rétrodiffusant (1), et comme bande de référence (K1) une longueur d'onde fixe.

7. Procédé d'analyse de signaux optiques rétrodiffusés, destiné à la détermination d'un profil de mesure en fonction de la longueur du parcours pour la mesure d'un profil de température, avec les étapes de procédé de la revendication 3, caractérisé en ce que la mesure est exécutée avec un milieu rétrodiffusant (1) qui est composé d'un brin d'aller et d'un brin de retour, lesdits brins étant reliés par une boucle à l'extrémité du parcours de mesure, et en ce que l'un des brins est neutre à la température tandis que l'autre brin est sensible à la température.

8. Procédé d'analyse de signaux optiques rétrodiffusés selon la revendication 7, caractérisé en ce que le brin sensible à la température est constitué par un guide d'ondes lumineuses (1) muni d'un revêtement ayant un coefficient de dilatation fortement dépendant de la température.

9. Procédé d'analyse de signaux optiques rétrodiffusés selon une des revendications 3 à 8, caractérisé en ce qu'on utilise comme bande de référence (K1) des longueurs d'onde d'une lumière qui est faiblement transmise dans le milieu rétrodiffusant (1), et comme bande de mesure (K2) des longueurs d'onde fixes d'une lumière qui est fortement transmise dans le milieu rétrodiffusant (1).

10. Procédé d'analyse de signaux optiques rétrodiffusés, destiné à la détermination d'un profil de mesure en fonction de la longueur de parcours d'un milieu rétrodiffusant, selon une des revendications précédentes, caractérisé en ce qu'en présence d'une modification, due au système, de la longueur d'onde moyenne de la source lumineuse (3), on procède dans la zone des canaux de mesure (K1, K2) à une modification de cette longueur d'onde qui la porte à la transmission maximale du ou des filtres.

Fig.1

FIG. 2

FIG. 3